Europäisches Patentamt

European Patent Office

Office européen des brevets

(19)

(11) Veröffentlichungsnummer: **0 043 104**
**B1**

(12) **EUROPÄISCHE PATENTSCHRIFT**

(45) Veröffentlichungstag der Patentschrift:
28.09.83

(21) Anmeldenummer: 81104906.3

(22) Anmeldetag: 25.06.81

(51) Int. Cl.³: **C 09 D 5/40**, C 09 D 3/00,
C 08 L 63/00

(54) Verfahren zur Herstellung wärmehärtbarer, mit Wasser verdünnbarer Lacke für die Beschichtung metallischer Substrate und deren Verwendung als Überzugsmittel.

(30) Priorität: 27.06.80 DE 3024158

(43) Veröffentlichungstag der Anmeldung:
06.01.82 Patentblatt 82/1

(45) Bekanntmachung des Hinweises auf die Patenterteilung:
28.09.83 Patentblatt 83/39

(84) Benannte Vertragsstaaten:
AT BE CH DE FR GB IT LI NL SE

(56) Entgegenhaltungen:
DE-A-2 248 836
DE-A-2 919 130
US-A-3 970 621

(73) Patentinhaber: **HOECHST AKTIENGESELLSCHAFT,**
**Postfach 80 03 20, D-6230 Frankfurt am Main 80 (DE)**

(72) Erfinder: **Johannes, Gerhard, Breslauer Strasse 6,**
**D-6204 Taunusstein (DE)**
Erfinder: **Shroff, Fali, Dotzhelmer Strasse 49,**
**D-6200 Wiesbaden (DE)**
Erfinder: **Dullis, Gerhard, Rembrandtstrasse 17,**
**D-6204 Taunusstein (DE)**
Erfinder: **Steidl, Dieter, Ulmenstrasse 8, D-6238 Hofheim**
**am Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

### Verfahren zur Herstellung wärmehärtbarer, mit Wasser verdünnbarer Lacke für die Beschichtung metallischer Substrate und deren Verwendung als Überzugsmittel

Die Erfindung betrifft ein Verfahren zur Herstellung von Lacken für die Beschichtung von Gegenständen oder Werkstücken durch Einsatz elektrolytischer Abscheidungsmethoden.

Aus der DE-OS 2 248 836 ist bekannt, Lacke für das elektrolytische Abscheideverfahren durch folgende Maßnahmen herzustellen, die eng mit der Pulverlackherstellung verbunden sind:

1. Vermischen der festen Komponenten des Pulverlackes;
2. Extrusion des Gemisches;
3. Kühlung des Extrudates;
4. Mahlung des Extrudates zu einem Pulverlack auf maximale Korngrößen von 100 µm;
5. Eintragung des gemahlenen Pulverlackes in ein kationisches Bindemittel;
6. Einstellung des Lackes mit Wasser auf den gewünschten Feststoffgehalt für den elektrolytischen Auftrag.

Die so hergestellten Lacke bestehen aus einem als Bindemittel dienenden kationischen Harz und einem pulverförmigen nicht-ionogenen Harz, die in getrennten Operationen hergestellt werden, sowie weiteren Zusätzen, und die gemeinsam vor der Anwendung zu dem Anstrichmittel verarbeitet werden. Mit diesen Lacken lassen sich Schichten mit einer Dicke von mehr als 30 µm erhalten.

Bei dem bekannten Verfahren wird stets erst ein Pulverlack erzeugt, bei dem in einer ersten Phase immer für eine besonders innige Durchmischung der Bestandteile gesorgt wird, und zwar entweder durch Schmelzen oder durch Auflösung in Aceton. Bei der Herstellung im Extruder durchläuft der Pulverlack im allgemeinen Temperaturen von 100 bis 130°C, und zwar für eine Dauer, die von den Extrusionsparametern Temperatur, Verweilzeit und Friktion abhängig ist. Bei dieser Temperatur tritt im allgemeinen eine Vorreaktion ein, die eine Erhöhung der Schmelzviskosität und damit schlechtes Verlaufen und ungenügende Substratbenetzung verursacht und sich so bei der späteren Verarbeitung auf die Filmbildung aus den Lacken nachteilig auswirkt. Außerdem ist eine Einbuße an mechanischen Festigkeiten der Lackschichten bei der schlagartigen Verformung bzw. bei der Dehnbarkeit zu beobachten. Auch die Beständigkeit gegen korrosive Einflüsse wird beeinträchtigt. Die Nachteile bei der Filmbildung wirken sich auch unvorteilhaft bei der weiteren Bearbeitung der nach dem elektrolytischen Auftrag und der chemischen Vernetzung erhaltenen Überzüge aus, z. B. wenn man die Welligkeit der Oberfläche durch Schleifen reduzieren will. Die Schleifarbeit ist naturgemäß um so größer, je welliger die Oberfläche ist, d. h. je schlechter der Lack verlaufen ist. Das Schleifen ist jedoch erforderlich, um den nachfolgend aufgetragenen Lackschichten mit dekorativer Funktion ein möglichst einwandfreies optisches Aussehen zu verleihen.

Der vorgenannte Arbeitsablauf Auftrag — Vernetzung — Schleifen — Überlackierung wird bei der Fahrzeuglackierung, vor allem bei der Lackierung von Personenkraftwagen angewendet.

Mit den aus der DE-OS 2 248 836 bekannten Lacken werden jedoch Überzugsfilme erhalten, die wegen der bereits beschriebenen Nachteile für eine breite Anwendung in der Praxis nicht in Betracht kommen, obwohl die Nachfrage erheblich ist.

Demgegenüber sieht die Erfindung die Herstellung von Lacken vor, die die genannten Nachteile nicht aufweisen, verbesserte Eigenschaften haben und außerdem einfacher herzustellen sind.

Ein Vorteil der Erfindung besteht darin, daß die bei der Dosierung und bei einer langen Mahlzeit auftretenden Gefahr einer Staubexplosion verhindert wird. Nach dem erfindungsgemäßen Verfahren geschieht die Zerkleinerung der Lackkomponenten in Mahlaggregaten. Zwar ist eine Zerkleinerung fester Substanzen in Mahlaggregaten seit langem bekannt. Im vorliegenden Falle jedoch wird bei Einsatz der speziellen Komponenten eine Vorreaktion ausgeschlossen, weil ein Aufschmelzen der Reaktionskomponenten, wie es beispielsweise im Extruderverfahren, das eine Vorreaktion begünstigt, vorgesehen ist, umgangen wird. Ferner ist ein wesentlich geringerer Aufwand für die Reinigung der verwendeten Apparaturen erforderlich, da keine Vorreaktion stattfindet, die zuweilen zu einem Ansetzen oder Anbacken an die Wandungen der Verarbeitungsgeräte führt. Schließlich wird eine größere Homogenität der erhaltenen Teilchen erzielt, die bei dem Auftrag auf das zu beschichtende Teil eine gleichmäßige Schichtdicke und einen nahezu konstanten Abfall der Stromstärke ergibt; ein Verhalten, wie es auch bei der Elektrotauchlackierung als vorteilhaft angesehen wird.

Weiter ist von Vorteil, daß technologisch und ökonomisch aufwendige Verfahrensschritte eliminiert werden können. Schließlich unterscheiden sich die durch das erfindungsgemäße Verfahren erhaltenen Lacke dadurch vom Stand der Technik, daß während der Fertigung Korrekturen an der Lackrezeptur durchgeführt werden können, und zwar ohne Wiederholung aufwendiger Verfahrensschritte.

Gegenstand der Erfindung ist ein Verfahren zur Herstellung wärmehärtbarer, mit Wasser verdünnbarer Lacke auf Basis von Polymerisaten und/oder Polykondensaten, kationischen Kunstharzen, Vernetzern und gegebenenfalls Pigmenten und/oder üblichen Hilfsstoffen, bei dem

A)  5–35, vorzugsweise 10–25 Gew.-% mindestens eines bei Raumtemperatur festen und bei der Vernetzungstemperatur verlaufenden Epoxidharzes,

B)  2–20, vorzugsweise 5–12 Gew.-% mindestens eines hydrophoben, bei Raumtemperatur festen Keton- und/oder Kohlenwasserstoffharzes ohne funktionelle Gruppen,

C)  15–60, vorzugsweise 30–55 Gew.-% mindestens eines kationischen wärmehärtbaren Kunstharzes mit funktionellen Gruppen, das in Lösung oder Dispersion mit einem Festkörpergehalt von 10–50 Gew.-% vorliegt,

D)  5–30, vorzugsweise 15–25 Gew.-% mindestens eines bei Raumtemperatur festen organischen Vernetzers und

E)  0–73, vorzugsweise 0–40 Gew.-% Pigment und/oder übliche Hilfsstoffe,

wobei die Summe der Komponenten A) bis E) stets 100 Gew.-% beträgt, gemeinsam in einer oder mehreren Stufen in Mahlaggregaten, wobei mindestens eine Stufe im Naßverfahren durchgeführt wird, unter Verkleinerung der ursprünglichen Partikelgröße zu einem homogenen Lack verarbeitet werden, der eine Teilchengröße von weniger als 100 μm aufweist, und anschließend mit Wasser auf den für den Auftrag erforderlichen Festkörpergehalt eingestellt wird.

Das erfindungsgemäße Verfahren kann kontinuierlich oder diskontinuierlich durchgeführt werden. Dabei werden die festen Ausgangsstoffe zusammen mit den anderen Komponenten in geeigneten Aggregaten vermahlen. Im allgemeinen besitzen derartige Mahlteige Festkörpergehalte bis zu 50 Gew.-%. Die Konzentration des Mahlgutes bei der Naßvermahlung kann u. U. auch größer, d. h. bis zu 80 Gew.-%, oder kleiner, d. h. bis zu 25 Gew.-% sein; sie ist von der Viskosität des Gutes abhängig und dieser wiederum von dem hydrophilen bzw. hydrophoben Verhalten der vorliegenden Komponenten. Auf jeden Fall muß aber die Pumpfähigkeit erhalten bleiben. Anschließend wird die erhaltene Lackmischung mit Wasser auf den gewünschten Feststoffgehalt eingestellt, sofern sie diesen noch nicht besitzt.

Die Teilchengröße der festen Bestandteile des Lackes sollen nach beendeter Mahlung höchstens 15, insbesondere höchstens 5 μm betragen.

Als Mahlaggregate für das erfindungsgemäße Verfahren sind beispielsweise Schwing-, Prallteller-, Stift-, Hammer-, Luftstrahl-, Planetkugel- und Sichtermühlen sowie Rührwerkskugelmühlen wie Sand- oder Perlmühlen und Kolloidmühlen geeignet, die einzeln oder in Kaskadenform arbeiten können, wobei auch die Möglichkeit von Kombinationen der verschiedenen Mühlentypen besteht. So kann z. B. in einer ersten Stufe eine trockene Grobzerkleinerung der Komponenten vorgenommen werden, der dann eine Naßvermahlung folgt. Die beiden Stufen können auch zu einem Mahlvorgang in einer Vorrichtung zusammengefaßt werden, indem am Anfang eines Mahlrohres die trockenen Materialien eingegeben und in der Mitte dann die flüssigen Komponenten zugesetzt werden.

Als flüssige Phase wird beim Naßverfahren vorzugsweise Wasser eingesetzt.

Das Epoxydharz A) des Lackes ist bei Raumtemperatur fest, schmilzt und verläuft bei der Vernetzungstemperatur, ist somit schichtenbildend und verleiht der Lackierung Korrosionsfestigkeit sowie Schlagfestigkeit. Hierfür eignen sich vorzugsweise Epoxydgruppen enthaltende Polymere, die auf der Basis von Diphenylolpropan (Bisphenol A) und/oder Diphenylolmethan (Bisphenol F) und Epihalogenhydrin und/oder Methylepihalogenhydrin, vorzugsweise Epichlorhydrin nach dem in der Literatur (siehe z. B. »Epoxidverbindungen und Epoxidharze« Paquin [1958], S. 322 ff.) beschriebenen Ein- oder Zweistufenverfahren hergestellt werden können, z. B. solche mit einem Erweichungspunkt (EP) nach Durrans von mindestens 70°C und einem Epoxydäquivalentgewicht (EÄ) von mindestens 490; EP 93–104°C und EÄ 875 bis 1000 und EP 118°C und EÄ 1865. Die Komponente A) wird im allgemeinen in Mengen von 5 bis 35, vorzugsweise 10 bis 25 Gew.-% eingesetzt. Diese und die weiterhin genannten Mengenverhältnisse beziehen sich stets auf 100 Gew.-% der Komponente A)–E).

Die Harze der Komponente B) sind hydrophobe, polymere Substanzen ohne funktionelle Gruppen, die das Verlaufen der Überzugsmasse und deren Vernetzung zum Untergrund sowie die Pigmentbenetzung begünstigen. Beispielsweise können Ketonharze und Kohlenwasserstoffharze wie Dicyclopentadienharze, Kohlenwasserstoffharze aus den C₅- bzw. C₉-Schnitten der Erdölfraktionierung, vorzugsweise jedoch Cumaron- oder Cumaron-Inden-Harze eingesetzt werden.

Als Trägerharz in der Lackmischung für die elektrolytische Beschichtung dient die Komponente C). Diese ist ein inter- und/oder intramolekular vernetzendes, wärmehärtbares, funktionelle Gruppen enthaltendes Harz, das das Bindemittel für alle im Lack enthaltenen Komponenten darstellt und als wäßrige Lösung oder Dispersion z. B. in Mengen von 15 bis 60, vorzugsweise 30 bis 55 Gew.-% (Festkörper) eingesetzt wird. Die verwendeten wäßrigen Lösungen oder Dispersionen der Harze haben vorzugsweise einen Feststoffgehalt von 21 bis 38 Gew.-% und enthalten als Lösungsmittel Wasser und/oder mindestens einen wasserlöslichen Alkohol, beispielsweise Methanol, Äthanol, n- und iso-Propanol. Das Trägerharz bewirkt infolge seines kationischen Charakters den Transport aller Substanzen des eingesetzten Lackes zu dem zu beschichtenden metallischen Substrat. Diese Trägerharze sind im allgemeinen wasserlöslich oder liegen in einer mit Wasser verdünnbaren Form vor und können beispielsweise sein: Epoxydharze mit angelagerten Aminogruppen (Aminoepoxyharze), Aminogruppen enthaltende Acrylate (Aminoacrylharze), Aminogruppen enthaltende Copolymerisate von Vinylverbindungen (Aminovinylharze), Aminharze (wie Melamin- und Harnstoffharze) und

3

Polyamidharze, sowie Mischungen davon. Bevorzugt sind die Aminoepoxydharze.

Auch die in der DE-OS 2 248 836 genannten Harze, die den Komponenten A) und C) entsprechen, können im allgemeinen bei dem erfindungsgemäßen Verfahren eingesetzt werden. Als Vernetzungskomponente D) eignen sich z. B. verkappte Polyisocyanate, vorzugsweise aliphatischer Natur. Beispiele für diese Polyisocyanate sind Hexamethylendiisocyanat, Methylen-bis-cyclohexyl-diisocyanat und ein durch Umsetzung von Hexamethylen-diisocyanat und Wasser hergestelltes Triisocyanat. Als Verkappungsprodukte kommen z. B. solche mit Acetessigsäureestern, beispielsweise des Methanols, Äthanols, der verschiedenen Propanole bzw. Butanole, oder mit ε-Caprolactam in Betracht. Weiterhin eignen sich auch Imidazol und 2-Imidazolin sowie deren Derivate, Dicyandiamid, substituierte Biguanide und Aminharze wie Melamin- und Harnstoffharze. Diese Verbindungen D) werden allein oder als Mischungen dem Ansatz zugefügt.

Bei dem erfindungsgemäßen Verfahren können dem Lack E) Pigmente und übliche Hilfsstoffe zugesetzt werden.

Die Pigmentierung wird unter Verwendung anorganischer und/oder organischer Pigmente, beispielsweise Titandioxid und Ruß durchgeführt, wobei der Anteil 50, vorzugsweise 29 Gew.-% nicht übersteigen soll. Ruß ist dabei im allgemeinen nicht mit mehr als 7, vorzugsweise nicht mit mehr als 1 Gew.-% enthalten.

Ferner kann feinteilige Kieselsäure in Mengen bis zu 18, vorzugsweise 1,0 Gew.-%, als Verschnittmittel zugegeben werden.

Verlaufmittel und Netzmittel sind beispielsweise Silikonöle und -harze, Polyacrylate wie Poly-n-butylacrylat oder Poly-2-äthyl-hexylacrylat und Celluloseacetobutyrat. Diese Hilfsstoffe werden im allgemeinen in Mengen bis zu 5, vorzugsweise bis zu 1 Gew.-% eingesetzt.

Die mit Hilfe des erfindungsgemäßen Verfahrens erhaltenen Lacke eignen sich hervorragend für die elektrolytische Beschichtung von metallischen Substraten im wäßrigen Bad, bei denen das Substrat als Kathode geschaltet ist.

Die Verfahrensweise der Abscheidung ist als sogenannte kataphoretische Abscheidung oder als EPC-Verfahren (Electrophoretic-Powder-Coating) bekannt.

Der Feststoffgehalt des wäßrigen Bades beträgt im allgemeinen 1 bis 30 Gew.-%, vorzugsweise 10 bis 15 Gew.-%. Der pH-Wert des Bades kann 7 oder weniger betragen und liegt vorzugsweise bei 4 bis 7.

Während der Durchführung der elektrolytischen Abscheidung wird das Bad zweckmäßig bei 20 bis 35°C gehalten. Eine Spannung wird zwischen die Kathode (zu beschichtendes Werkstück) und die Anode gelegt, so daß ein Gleichstrom durch das Bad fließt. Die anzulegende Spannung beträgt im allgemeinen 20 bis 600 V, vorzugsweise 50 bis 400 V.

Die elektrolytische Abscheidung wird solange durchgeführt, bis ein Film der gewünschten Dicke auf dem als Kathode dienenden Werkstück abgeschieden worden ist. Im allgemeinen beträgt die Abscheidungszeit 10 bis 60, vorzugsweise 20—40 s. Es können mit Hilfe der erfindungsgemäß hergestellten Lacke auch dickere Filme (als beim üblichen elektrolytischen Abscheidungsprozeß) auf dem Werkstück abgeschieden werden. Vorzugsweise beträgt die Dicke 30 bis 100 μm, insbesondere 40—60 μm, jedoch sind auch Filmdicken bis etwa 200 μm oder mehr erzielbar.

Nach der elektrolytischen Abscheidung wird das mit dem Harz beschichtete Werkstück aus dem Bad genommen, mit Wasser gespült und dann in üblicher Weise erhitzt oder eingebrannt, wobei die Harzschicht schmilzt und/oder ausgehärtet und ein Film gebildet wird. Vorzugsweise wird das beschichtete Werkstück bis zu etwa 10 Minuten auf eine Temperatur von 50 bis 100°C vorgewärmt und dann 15 bis 30 Minuten bei einer Temperatur von 150 bis 250°C eingebrannt.

Während des kationischen Abscheidungsprozesses werden die festen Bestandteile des Lackes aus dem Bad abgeschieden. Daher ist es notwendig, diese Stoffe dem Bad wieder zuzusetzen, um eine entsprechende Badkonzentration aufrecht zu erhalten. Der Zusatz kann kontinuierlich oder bei Stillstand der Anlage auch diskontinuierlich erfolgen. Es muß gewährleistet werden, daß die Anfangsbedingungen weitgehend wiederhergestellt werden.

In den nachfolgenden Beispielen bedeutet T Gewichtsteile und % Volumenprozent, wenn nicht anders angegeben.

Beispiel 1

141 T urethanmodifiziertes kationisches Aminoepoxidharz (Komponente C) gemäß Beispiel 8 der DE-AS 2 248 836 mit einem Festkörpergehalt von 30 Gew.-%, dessen Einstellung mit deionisiertem Wasser erfolgt, 1 T Polymethylsiloxan (Komponente E), 14 T Epoxydharz (Komponente A) aus 4,4'-Diphenylolpropan und Epichlorhydrin (Erweichungspunkt (EP) nach Durrans 93° bis 104°C, Epoxydäquivalentgewicht (EÄ) 875 bis 1000, Viskosität 430 bis 630 mPa · s in 40%iger Lösung, gemessen in Äthylenglykoldibutyläther bei 25°C), 8 T Cumaronharz (Komponente B) (EP 111 bis 130°C und einer Säurezahl unter 1), 20 T Methylen-bis-cyclohexyl-diisocyanat (Komponente D) mit einem NCO-Gehalt von 13 Gew.-%, verkappt mit ε-Caprolactam (die genannten festen Verbindungen besitzen eine Korngröße von ca. 1 mm), 13 T handelsübliches Titandioxyd (Komponente E), 0,4 T feinverteilter Ruß (Komponente E) und 0,2 T feinverteiltes Siliciumdioxyd (Komponente E) mit einer Reinheit von über 99,8 Gew.-% einer BET-Oberfläche von 300±30 und einer mittleren Primärteilchengröße von 7 Nanometer werden einer Rührwerkskugelmühle zugegeben. Diese ist mit Quarzitmahlkörpern von 0,5–3 mm Größe ausgestattet. Bei einer Umfangsgeschwindigkeit von 12 m/s wird der Lackansatz in 30 Minuten auf eine maximale Teilchengröße von 10–15 μm zerkleinert. Dann werden unter gleichzeitiger Abtrennung der verwendeten Mahlkörper 548 T deionisiertes Wasser zugegeben. Ausbeute 746 T.

## Beispiel 2

Beispiel 1 wird wiederholt mit dem Unterschied, daß die Ausgangsharze und Härter als grobkörnige Materialien mit einer maximalen Korngröße von 10 mm eingesetzt werden und anstelle des Cumaronharzes eine gleiche Menge eines Ketonharzes und zwar eines handelsüblichen Cyclohexanonharzes (Erweichungspunkt nach DIN 13 180: 75–85°C; Viskosität bei 23°C nach DIN 53 211, 50%ig in Xylol: 15 s; Säurezahl=1) verwendet wird. Als Mahlaggregat dient eine Schwingmühle, deren Schwingkörper aus zwei über Stege verbundenen Mahlrohren besteht und die Stahlstangen mit einem Durchmesser von 20 mm enthält. Damit ist eine kontinuierliche Arbeitsweise möglich. Nach dem Mahlvorgang wird mit deionisiertem Wasser auf den gewünschten Feststoffgehalt eingestellt. Die Festteilchen haben eine maximale Korngröße von 12 μm.

Die Zusammensetzung des Lackes des Beispiels 1 wurde in den nachfolgenden Beispielen 3 bis 8 variiert. Die Einsatzmengen (in Teilen) sind aus der Tabelle 1 ersichtlich.

Tabelle 1

| | Beispiel 3 | 4 | 5 | 6 | 7 | 8 |
|---|---|---|---|---|---|---|
| Komponente A | 8[1] | 35[2] | 25[1] | 13[1] | 25[1] | 8,6[1] |
| Komponente B | 2[3] | 20[3] | 12[3] | 7[4] | 12[4] | 4,4[3] |
| Komponente C | 60 | 15 | 48 | 55 | 26 | 26,1 |
| Komponente D | 30 | 15 | 15 | 25 | 25 | 26,1[5] |
| Komponente E | – | 15 | – | – | 12 | 34,7 |
| Polysiloxan | | – | | | 1 | 0,9 |
| E = Ruß | | – | | | 1 | – |
| SiO$_2$ | | 5 | | | 10 | 8,6 |
| TiO$_2$ | | 10 | | | – | 25,2 |

[1]) Epoxidharz wie Beisp. 1.
[2]) Epoxidharz EP. 70–80, EA 490.
[3]) Komponente B wie Beisp. 1.
[4]) Komponente B wie Beisp. 2.
[5]) Hexamethylendiisocyanat, verkappt mit Acetessigsäure-tert.-butylester.

## Vergleichsbeispiel (gemäß Beispiel 8 der DE-OS 2 248 836)

350 T eines Epoxydharzes aus 4,4'-Diphenylolpropan und Epichlorhydrin (EP 93 bis 104°C [Durrans]; EÄ 875 bis 1000), 150 T eines Epoxydharzes aus den gleichen Komponenten (EP 118°C, EÄ 1865) und 40 T eines handelsüblichen Polyamidharzes, hergestellt aus Hexamethylendiamin und Adipinsäure, werden gemischt und in einer Strangpresse in der üblichen Weise geschmolzen und geknetet. Nach einer Grobmahlung werden 50 T Eisenoxydpigment und 20 T Dicyandiamid zugesetzt und der Ansatz zu einem Pulver von 40 μm vermahlen. 137 T des in der DE-OS genannten handelsüblichen urethanmodifizierten Aminoepoxydharzes, mit deionisiertem Wasser auf 30 Gew.-% Festkörpergehalt verdünnt, werden mit 450 T Wasser und 1 T Eisessig vermischt und darin 200 T des oben beschriebenen Pulvers dispergiert.

### Beispiel 9

Die Ansätze gemäß Beispiel 1 bis 8 sowie des Vergleichsbeispiels werden jeweils mit deionisiertem Wasser auf einen Feststoffgehalt von 15 Gew.-% verdünnt, mit Essigsäure auf einen pH-Wert von 5 eingestellt und mit diesen Bädern die elektrolytische Beschichtung in bekannter Weise durchgeführt.

Ein zu überziehendes Stahlblech (zinkphosphatiert, Bonder 130) wird als Kathode in das Bad getaucht. Ferner wird eine Anode aus nichtrostendem Stahl in das Bad eingesetzt.

Die elektrolytische Abscheidung wird unter kräftiger Bewegung der Flüssigkeit während 25 Sekunden bei 25°C in üblicher Weise durchgeführt. Der Abstand zwischen den Elektroden beträgt 15 cm und die angelegte Spannung 200 V. Das elektrolytisch beschichtete Blech, das mit einer Schichtdicke von 50 µm versehen ist, wird aus dem Bad genommen, mit Wasser gespült, zur Trocknung 10 min auf 70°C vorgewärmt und dann 20 min bei 180°C eingebrannt.

Die erhaltenen Bleche wurden einer Prüfung unterzogen, wobei die in der Tabelle 2 angeführten Werte erhalten wurden.

Auffällig ist die starke Erhöhung der Schlagzähigkeit. Aber auch die anderen Prüfwerte zeigen eine deutliche Verbesserung in den Eigenschaften der erhaltenen Überzüge, deren Lack gemäß der vorliegenden Erfindung hergestellt wurde.

### Tabelle

| | Beispiele | | | | | | | | Ver- |
| | 1 | 2 | 3 | 4 | 5 | 6 | 7 | 8 | gleich |
|---|---|---|---|---|---|---|---|---|---|
| Schlagzähigkeit ASTM D 2794 (reverse, inch pound) | 160 | 140 | 80 | 140 | 110 | 140 | 100 | 80 | 5 |
| Oberflächenwelligkeit*) | 1 | 1,5 | 2 | 1,5 | 1,5 | 1 | 2,5 | 2,5 | 4 |
| Schleifarbeit*) | 2 | 2 | 2,5 | 2 | 2 | 2 | 2,5 | 2,5 | 4 |
| Sedimentation der Feststoffe im verarbeitungsfertigen Lack*) | 1 | 1 | 1 | 1 | 1 | 1 | 1 | 1 | 4 |
| Erichsen-Tiefung (DIN 53 156) [mm] | 9 | 9 | 6,5 | 8 | 8 | 8 | 8 | 6 | 4 |
| Abdeckung der Blechkante mit Lack*) | 2 | 2 | 2,5 | 2 | 2,5 | 2 | 2,5 | 2,5 | 3 |

*) (Benotung nach DIN 53 230).
0 = Bester Wert.
5 = Schlechtester Wert.

### Patentansprüche

1. Verfahren zur Herstellung wärmehärtbarer, mit Wasser verdünnbarer Lacke auf Basis von Polymerisaten und/oder Polykondensaten, kationischen Kunstharzen, Vernetzern und gsgebenenfalls Pigmenten und/oder üblichen Hilfsstoffen, dadurch gekennzeichnet, daß

A) 5—35, vorzugsweise 10—25 Gew.-% mindestens eines bei Raumtemperatur festen und bei der Vernetzungstemperatur verlaufenden Epoxydharzes,

B) 2—20, vorzugsweise 5—12 Gew.-% mindestens eines hydrophoben, bei Raumtemperatur festen Keton- und/oder Kohlenwasserstoffharzes ohne funktionelle Gruppen,

C) 15—60, vorzugsweise 30—55 Gew.-% mindestens eines kationischen wärmehärtbaren Kunstharzes mit funktionellen Gruppen, das in Lösung oder Dispersion mit einem Festkörpergehalt von 10—50 Gew.-% vorliegt,

D) 5—30, vorzugsweise 15—25 Gew.-% mindestens eines bei Raumtemperatur festen organischen

0 043 104

Vernetzers und

E) 0 – 73, vorzugsweise 0 – 40 Gew.-% Pigmente und/oder übliche Hilfsstoffe,

wobei die Summe der Komponenten A) bis E) stets 100 Gew.-% beträgt, gemeinsam in einer oder mehreren Stufen in Mahlaggregaten, wobei mindestens eine Stufe im Naßverfahren durchgeführt wird, unter Verkleinerung der ursprünglichen Partikelgröße zu einem homogenen Lack verarbeitet werden, der eine Teilchengröße von weniger als 100 µm aufweist, und anschließend mit Wasser auf den für den Auftrag erforderlichen Festkörpergehalt eingestellt wird.

2. Verfahren nach Anspruch 1, dadurch gekennzeichnet, daß als Komponente B) Dicyclopentadien-harze, Kohlenwasserstoffharze aus den C_5- bzw. C_9-Schnitten der Erdölfraktion, vorzugsweise jedoch Cumaron- oder Cumaron-Inden-Harze eingesetzt werden.

3. Verfahren nach Anspruch 1 oder 2, dadurch gekennzeichnet, daß eine Teilchengröße von höchstens 15, insbesondere höchstens 5 µm erzeugt wird.

4. Verfahren nach einem oder mehreren der Ansprüche 1 bis 3, dadurch gekennzeichnet, daß die Mahlung kontinuierlich durchgeführt wird.

5. Verfahren nach einem oder mehreren der Ansprüche 1 bis 4, dadurch gekennzeichnet, daß die Mahlung in wenigstens einer Stufe in Gegenwart von Wasser durchgeführt wird.

6. Verfahren nach einem oder mehreren der Ansprüche 1 bis 5, dadurch gekennzeichnet, daß der Lack auf einen Festkörpergehalt von 1 bis 30, insbesondere 10 bis 20 Gew.-% eingestellt wird.

7. Verwendung der nach dem Verfahren gemäß einem oder mehreren der Ansprüche 1 bis 6 erhaltenen Lacke als Überzugsmittel für die elektrolytische Beschichtung von metallischen Substraten.


## Claims

1. Process for preparing heat-curable, water-dilutable lacquers based on polymers and/or polycondensates, cationic synthetic resins, cross-linking agents and optionally pigments and/or conventional adjuvants, characterized in that

A) 5 to 35, preferably 10 to 25% by weight of at least one epoxy resin which is solid at ambient temperature and flows at the cross-linking temperature,
B) 2 to 20, preferably 5 to 12% by weight of at least one hydrophobic ketone resin and/or hydrocarbon resin without functional groups which is solid at ambient temperature,
C) 15 to 60, preferably 30 to 55% by weight of at least one cationic heat-curable synthetic resin having functional groups which is in the form of a solution or dispersion with a solids content of 10 to 50% by weight,
D) 5 to 30, preferably 15 to 25% by weight of at least one cross-linking agent which is solid at ambient temperature and
E) 0 to 73, preferably 0 to 40% by weight of pigments and/or conventional adjuvants,

in which the sum of components A) to E) is always 100% by weight, are processed together in one or more stages in grinding apparatuses to yield a homogeneous lacquer while comminuting the original particle size, at least one stage being carried out in a wet operation, the lacquer having a particle size of less than 100 µm, and in that subsequently the solids content demanded for application is adjusted by water.

2. Process according to claim 1, characterized in that dicyclopentadiene resins, hydrocarbon resins derived from the C_5- or C_9-fractions of the fractionation of petroleum, respectively, but preferably cumarone resins or cumaroneindene resins are used as component B).

3. Process according to claim 1 or 2 characterized in that a particle size of at most 15, particularly at most 5 µm is produced.

4. Process according to one or more of claims 1 to 3, characterized in that the grinding is carried out continuously.

5. Process according to one or more of claims 1 to 4, characterized in that the grinding is carried out in at least one stage in the presence of water.

6. Process according to one or more of claims 1 to 5, characterized in that the lacquer is adjusted to a solids content of from 1 to 30, particularly 10 to 20% by weight.

7. Use of the lacquers obtained by the process according to one or more of claims 1 to 6 as coating agents for the electrolytic coating of metallic substrates.


## Revendications

1. Procédé de préparation de vernis et peintures diluables à l'eau, thermodurcissables, à base de polymères et/ou de produits de polycondensation, de résines synthétiques cationiques, d'agents de

7

réticulation et éventuellement de pigments et/ou d'adjuvants usuels, procédé caractérisé en ce que l'on traite

A) 5 à 35, avantageusement 10 à 25, % en poids d'au moins une résine époxyde solide à la température ambiante et fluidifiée à la température de réticulation,

B) 2 à 20, avantageusement 5 à 12, % en poids d'au moins une résine cétonique et/ou hydrocarbonée sans groupes fonctionnels, hydrophobe, solide à la température ambiante,

C) 15 à 60, avantageusement 30 à 55, % en poids d'au moins une résine synthétique thermodurcissable cationique comportant des groupes fonctionnels, qui se trouvent en solution ou dispersion en y représentant un extrait sec de 10 à 50% en poids,

D) 5 à 30, avantageusement 15 à 25, % en poids d'au moins un agent organique de réticulation, solide à la température ambiante, et

E) 0 à 73, avantageusement 0 à 40, % en poids de pigments et/ou d'adjuvants usuels,

(la somme des composants A) à E) formant toujours 100% en poids) ensemble en une ou plusieurs étapes dans des broyeurs, au moins une étape étant effectuée au mouillé, avec réduction de la grosseur des particules d'origine pour obtenir une peinture ou un vernis homogène présentant une grosseur des particules inférieure à 100 µm, puis l'on ajuste, avec de l'eau, à la valeur de l'extrait sec nécessaire pour l'application.

2. Procédé selon la revendication 1, caractérisé en ce qu'on utilise comme composant B) des résines de dicyclopentadiène, des résines hydrocarbonées provenant de coupes en $C_5$ ou en $C_9$ de fractions d'huile minérale, mais avantageusement des résines de coumarone ou de coumarone et d'indène.

3. Procédé selon la revendication 1 ou 2, caractérisé en ce qu'on produit une grosseur des particules d'au maximum 15 µm et en particulier d'au maximum 5 µm.

4. Procédé selon l'une quelconque des revendications 1 à 3, caractérisé en ce qu'on effectue le broyage en continu.

5. Procédé selon l'une quelconque des revendications 1 à 4, caractérisé en ce qu'on effectue le broyage en opérant dans au moins une étape en présence d'eau.

6. Procédé selon l'une quelconque des revendications 1 à 5, caractérisé en ce qu'on ajuste le vernis ou la peinture à une valeur d'extrait sec de 1 à 30, en particulier de 10 à 20% en poids.

7. Application des vernis ou peintures, que l'on obtient par le procédé selon l'une quelconque des revendications 1 à 6, comme composition de revêtement pour l'enduction électrolytique de subjectiles métalliques.